Europäisches Patentamt

European Patent Office

Office européen des brevets

(19)

(11) Numéro de publication: **0 030 165**
**B1**

(12)　　　　**FASCICULE DE BREVET EUROPEEN**

(45) Date de publication du fascicule du brevet: **13.04.83**　　(51) Int. Cl.³: **F 16 D 23/14**

(21) Numéro de dépôt: **80401346.4**

(22) Date de dépôt: **19.09.80**

---

(54) **Butée d'embrayage à roulement à autocentrage.**

---

(30) Priorité: **04.12.79 FR 7929788**

(43) Date de publication de la demande:
**10.06.81 Bulletin 81/23**

(45) Mention de la délivrance du brevet:
**13.04.83 Bulletin 83/15**

(84) Etats contractants désignés:
**DE GB IT**

(56) Documents cités:
**FR - A - 1 589 720**
**FR - A - 2 255 502**
**FR - A - 2 346 600**

(73) Titulaire: **SOCIETE NOUVELLE DE ROULEMENTS S.A.**
**Boîte Postale 17 1, rue des Usines**
**F-74010 Annecy Cedex (FR)**

(72) Inventeur: **Sonnerat, Claude**
**Route des Argos**
**F-74000 Annecy Le Vieux (FR)**

(74) Mandataire: **Ernst-Schonberg, Michel et al,**
**RNUR - S. 0804 B.P. 103**
**F-92109 Boulogne-Billancourt (FR)**

---

Courier Press, Leamington Spa, England.

## Butée d'embrayage à roulement à autocentrage

Pour remédier aux glissements générateurs d'usure entre une butée d'embrayage à roulement et l'organe avec lequel elle coopère, tel qu'un diaphragme, ces glissements étant dus à l'imperfection géométrique de montage des axes de l'embrayage et du guidage de la butée, il est connu de monter le roulement de butée avec un certaine liberté de déplacement radial sur un support guidé déplaçable axialement à l'embrayage et au débrayage et ce pour permettre un autocentrage du roulement.

Une telle mesure est en particulier d'importance dans tous les embrayages de montage répandu où la butée demeure en appui constant avec l'organe avec lequel elle coopère.

On connaît notamment des butées d'embrayage à roulement et à autocentrage qui font appel pour cette dernière fonction à un montage de la bague non tournante avec une certaine liberté radiale sur son support accompagnée d'un serrage élastique de maintien en appui axial glissant sur ledit support.

Le brevet FR—A—2 255 502 décrit une telle butée comportant une agrafe de serrage.

Mais on a constaté que de tels montages n'apportent pas toujours l'autocentrage désiré et travaillent souvent avec des glissements résiduels indésirables, notamment selon les efforts entrant en jeu pour parvenir à l'autocentrage sous la pression d'appui de la butée ou selon le degré d'imperfection géométrique précité.

La présente invention a pour objet une butée d'embrayage perfectionnée à roulement et à autocentrage éliminant pratiquement les inconvénients précités.

Essentiellement, à cet effet, la butée d'embrayage à roulement et à autocentrage selon l'invention, dans laquelle le roulement comporte une bague destinée à coopérer avec un organe d'actionnement de l'embrayage tandis que son autre bague est montée, sur un support à déplacement axial commandé aux fins de débrayage et embrayage, avec une certaine liberté radiale et par serrage élastique au moyen d'une agrafe en appui axial glissant sur ledit support, est caractérisée en ce que la dite agrafe exerçant un effort de pincement localisé de la bague sur le support de sorte qu'elle constitue pour la bague, le centre d'un mouvement de pivotement se superposant à sa liberté de glissement radiale pour le processus d'autocentrage.

On verra qu'une telle disposition permet de garantir l'obtention de l'autocentrage recherché dans toutes les limites de la liberté radiale prévue pour compenser l'imperfection géométrique d'alignement de montage prémentionnée.

De préférence, dans le cadre de l'invention, il est prévu une seconde agrafe de serrage diamétralement opposée à l'agrafe précitée mais exerçant un effort de pincement de la bague sur le support inférieur à celui de la première agrafe précitée, et qui peut être utile comme élément d'action complémentaire à effet amortisseur du pivotement de la bague dans le processus d'autocentrage.

En outre, dans ce dernier cas, les deux agrafes peuvent être avantageusement conformées pour servir, sur la face du support opposée à celle d'appui de la bague pincée du roulement, d'organes de coopération avec la fourchette usuelle de commande de l'embrayage.

Plusieurs formes de réalisation d'une butée d'embrayage selon l'invention sont d'ailleurs ci-après décrites à titre d'exemple et en référence au dessin annexé, dans lequel:

la figure 1 est une vue en coupe axiale horizontale d'une première forme de réalisation d'une butée selon l'invention, vue en position de montage;

la figure 2 est une vue de dos après rabattement à gauche de la butée de la figure 1;

la figure 3 est une vue en coupe de la butée suivant III—III de la figure 1, après rabattement à droite;

la figure 4 est une vue en coupe axiale de la butée suivant IV—IV de la figure 1;

la figure 5 est une demi-vue en coupe analogue à celle de la figure 4, d'une variante partielle de réalisation de la butée;

la figure 6 est une vue en coupe axiale horizontale d'une troisième forme de réalisation d'une butée selon l'invention, vue en position de montage;

la figure 7 est une vue de dos après rabattement à gauche de la butée de la figure 6;

la figure 8 est une vue en coupe de la butée suivant VIII—VIII de la figure 7, après rabattement à droite;

les figures 9 et 10 sont deux vues illustratives de deux cas d'obtention d'autocentrage avec une butée selon l'invention.

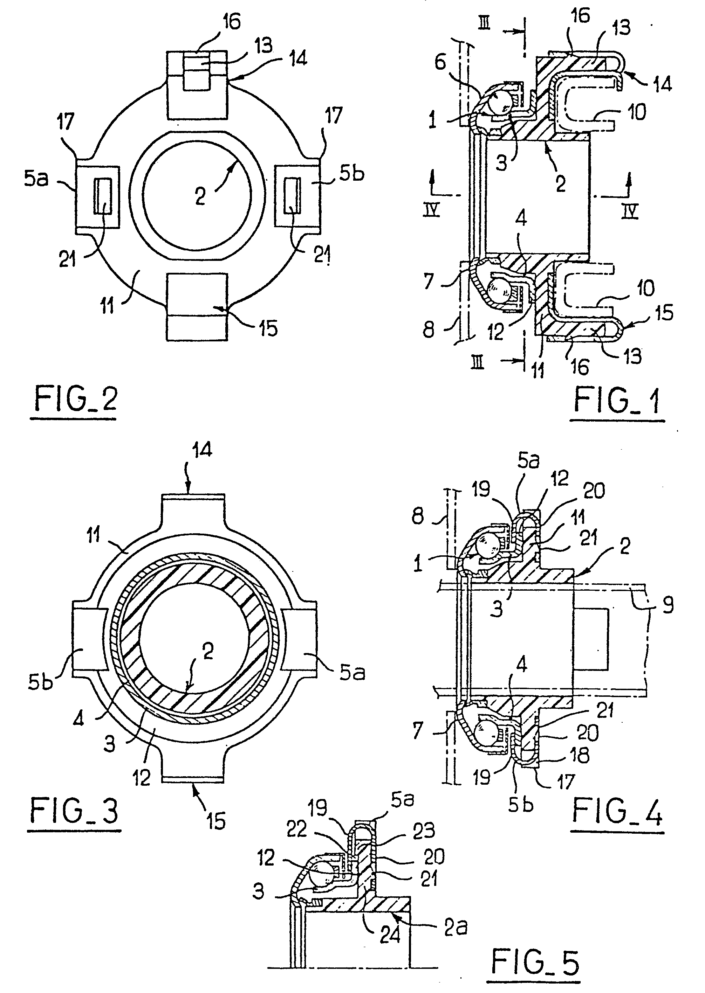

La butée d'embrayage représentée aux figures 1 à 4 comporte essentiellement un roulement désigné par 1 dans son ensemble, à bagues en tôle emboutie et billes à contact oblique, et un manchon de support désigné par 2 dans son ensemble, sur lequel l'une des bagues 3 du roulement est montée avec une certaine liberté radiale en 4 et maintenue axialement par l'intermédiaire d'agrafes élastiques 5a, 5b, l'autre bague 6 du roulement étant libre de tourner et présentant une surface frontale 7 destinée à coopérer avec un organe d'actionnement de l'embrayage, tel qu'un diaphragme usuel représenté en trait mixte en 8.

Ainsi qu'il est usuel, le manchon de support 2 est destiné à être monté à coulissement sur un tube guide représenté en 9 en trait mixte à la figure 4, et à subir des déplacements axiaux sur ce dernier aux fins de débrayage et embrayage, commandés par l'intermédiaire d'une fourchette dont les doigts sont représentés en 10 en trait mixte à la figure 1.

Le manchon 2, ici en matière synthétique moulée, présente une collerette radiale 11 dont la face avant sert de surface d'appui axial glissant à une collerette 12 formant partie de la bague 3. La collerette 11 du manchon présente à sa périphérie deux pattes opposées 13 dirigées vers l'arrière et sur lesquelles sont engagées deux agrafes métalliques 14, 15 clipsées chacune sur un ergot de retenue 16 et constituant les surfaces de coopération de la butée avec les doigts de fourchette 10.

La collerette 11 du manchon présente à sa périphérie deux bossages radiaux encochés 17, dans les encoches 18 desquels sont montées les agrafes 5a, 5b en forme de pince à deux branches qui servent à maintenir, par leur branche avant 19, la collerette 12 en appui axial glissant sur la collerette 11 du manchon et dont la branche arrière 20 est clipsée sur un ergot de retenue 21 ménagé sur la face arrière de la collerette 11.

De plus, ces deux agrafes sont telles que l'effort de pincement ou maintien axial exercé par l'une d'elles sur les collerettes 11, 12 (et qui pourrait être utilisée seule ainsi qu'il a été dit) est notablement supérieur à celui exercé par l'autre, afin de permettre un autocentrage effectif dans tous les cas ainsi qu'on l'exposera plus loin.

La figure 5 illustre une variante de réalisation selon laquelle la liberté radiale de la bague 3 du roulement au lieu d'être limitée intérieurement par sa coopération avec le moyeu du manchon 2a est prévue à sa périphérie en 22, et limitée par une saillie avant circonférentielle 23 de la collerette 24 qui entoure le manchon ainsi modifié.

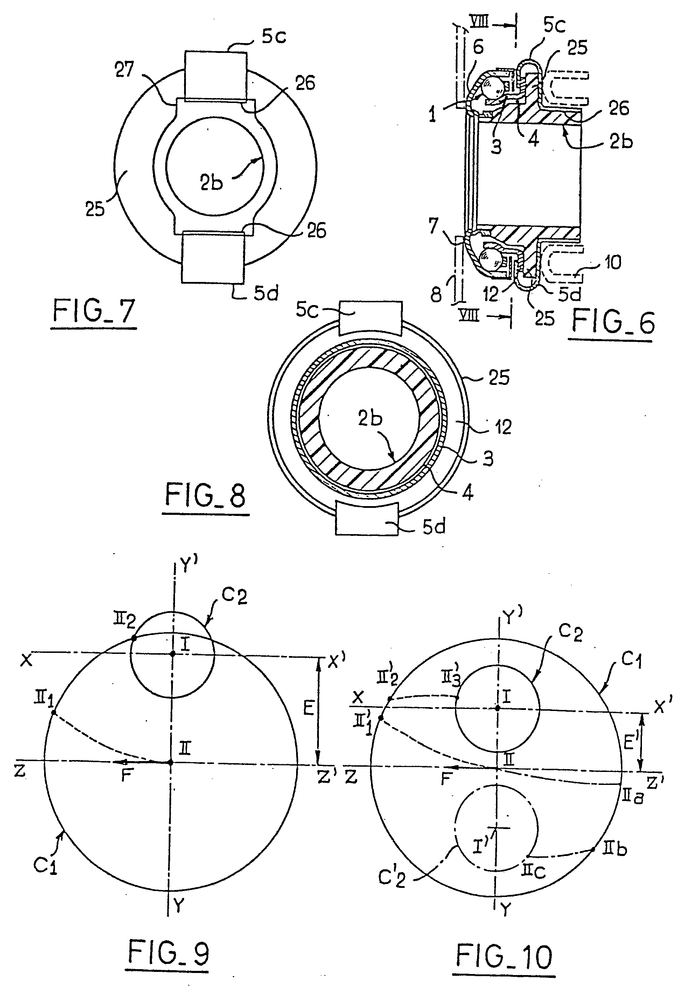

Les figures 6 à 8 illustrent une autre variante de réalisation selon laquelle le manchon de support 2b du roulement 1 est modifié en ce que sa collerette 25 est une simple collerette circulaire, tandis que deux agrafes 5c, 5d venant pincer la collerette 12 de la bague 3 du roulement et la collerette 25 forment elles-mêmes par leur branche arrière coudée en équerre les surfaces de coopération de la butée avec les doigts de fourchette 10, la branche axiale de l'équerre étant calée angulairement dans un encoche correspondante 26 d'un bossage radial 27 que présente le moyeu arrière du manchon pour chaque agrafe.

Les figures 9 et 10 illustrent en référence à la réalisation des figures 1 à 4 deux cas d'obtention d'autocentrage avec une butée selon l'invention.
Dans ces figures:

— l'axe I, intersection des plans ayant pour trace X, X' et Y, Y' représente l'axe de rotation de l'embrayage et de son diaphragme 8;
— l'axe II, intersection des plans ayant pour trace Y, Y' et Z, Z', représente l'axe de montage du tube guide 9 et donc l'axe de déplacement axial du manchon de support 2 de la butée;
— la distance E (figure 9) ou E' (figure 10) entre les axes I et II représente donc l'excentration par rapport à l'axe I du roulement 1 de la butée, supposé centré par son montage initial sur le manchon de support 2.

Lors de la rotation de l'embrayage et donc du diaphragme, à voir ici dans le sens des aiguilles d'une montre, une force F via donc s'exercer sur la bague tournante 6 du roulement 1. Compte-tenu de la faculté de pivotement de la bague 3 à l'endroit de l'agrafe 5a située dans l'axe Y' et de sa faculté de rotation glissante, la bague 3 va par exemple être déplacée radialement sur le manchon de support 2, suivant une trajectoire faisant passer son axe de II en II1, c'est-à-dire à la limite de sa liberté radiale représentée au dessin par le cercle C1, à l'intérieur duquel l'axe du roulement 1 peut évoluer autour de l'axe II.

Ensuite, à partir du point II1, le centre du roulement 1 va continuer à se déplacer dans le sens des aiguilles d'une montre en suivant le cercle C1.

Dans le cas de la figure 9, ceci va amener le centre du roulement 1 à se rapprocher de l'axe I, au point de s'arrêter en II2, c'est-à-dire dans une proximité telle de l'axe I que la force de friction exercée par le diaphragme 8 sur la bague 6 et tendant au déplacement du roulement 1 devienne inférieure à la force de frottement de la bague 3 sur le manchon de support 2, c'est-à-dire que le roulement 1 est considéré comme pratiquement autocentré avec un frottement négligeable par rapport au diaphragme quant à l'usure à éviter. On a figuré par le cercle C2 cette zone d'excentration minimale de captage de l'axe du roulement correspondant à l'autocentrage désiré.

On a illustré à la figure 10, le cas plus général correspondant à une excentration de montage E' telle que le cercle C2 de captage de l'axe du roulement se trouve à l'intérieur du cercle C1 représentatif de la liberté radiale de l'axe du roulement 1. Dans ce cas aussi, la rotation du diaphragme de l'embrayage engendre sur la bague 6 une force F répercutée sur la bague 3 qui va se déplacer initialement et radialement suivant une trajectoire faisant passer par exemple son axe de II en II'1, c'est-à-dire à la limite de sa liberté radiale correspondant au cercle C1. Mais, ensuite, à partir du point II'1, et en supposant la bague 3 pincée sous le même effort par les agrafes 5a, 5b sur le manchon de support, l'axe du roulement continuerait à se déplacer dans le sens des aiguilles d'une montre en suivant le cercle C1 sans jamais risquer de rencontrer donc le cercle de captage C2 de l'axe du roulement en position d'excentration minimale (un tel phénomène se produirait dans tout montage comportant plus de deux agrafes ou n'ayant aucun organe de serrage comparable).

Mais, en utilisant ici une agrafe 5a exerçant essentiellement l'effort de pincement de la bague 3 sur le manchon de support, il en résulte qu'à partir du moment où l'axe du roulement a dépassé vers le haut X—X' et donc l'axe I, par exemple à partir du point II'2, il ne va plus suivre le cercle C1, car la bague 3 va se trouver sollicitée au pivotement autour du point de pivotement que constitue le centre de pression de l'agrafe 5a. Cela conduit alors l'axe du roulement 1 à traverser le cercle C1 jusqu'à venir rencontrer le cercle de captage C2 comme par exemple illustré en II'3, et à s'arrêter ainsi dans la zone d'excentration minimale correspondant à l'autocentrage désiré. Dans un cas symétrique avec cercle C'2 en trait mixte, la trajectoire correspondante est donnée par II, IIa, IIb, IIc par exemple.

On notera que cette trajectoire d'intersection du cercle de captage C2 peut même être directe lorsque celui-ci est notamment situé au voisinage de l'axe Z, Z'.

On a constaté que l'on peut mettre à profit de façon utile la disposition d'une seconde agrafe telle que 5b, à effort de pincement inférieur à celui de l'agrafe 5a afin de ne pas affecter la faculté de pivotement apportée par cette dernière, mais suffisant pour contribuer à amortir ce pivotement en phase d'arrivée en position d'autocentrage.

**Revendications**

1. Butée d'embrayage à roulement à autocentrage, dans laquelle le roulement comporte une bague (6) destinée à coopérer avec un organe d'actionnement (8) de l'embrayage tandis que son autre bague (3) est montée sur un support (2) à déplacement axial commandé aux fins de débrayage et embrayage, avec une certaine liberté radiale et par serrage élastique au moyen d'une agrafe en appui axial glissant sur ledit support, caractérisée en ce que ladite agrafe (5a, 5c) exerce un effort de pincement localisé de la bague (3) sur le support (2) de sorte qu'elle constitue pour la bague (3) le centre d'un mouvement de pivotement se superposant à sa liberté de glissement radiale pour le processus d'autocentrage.

2. Butée d'embrayage à roulement à autocentrage selon la revendication 1, caractérisée en ce qu'il est prévu une seconde agrafe (5b, 5d) de serrage diamétralement opposée à l'agrafe précitée (5a, 5c) mais exerçant un effort de pincement de la bague 3 sur le support (2) inférieur à celui de la première agrafe (5a, 5c) précitée.

3. Butée d'embrayage à roulement à autocentrage selon les revendications 1 et 2, caractérisée en ce que les deux agrafes (5a, 5b, 5c, 5d) sont conformées pour servir, sur la face du support (2) opposée à celle d'appui de la bague (3) pincée du roulement, d'organes de coopération avec une fourchette de commande de l'embrayage.

**Patentansprüche**

1. Selbstzentrierendes Wälzlager-Kupplungsanschlagelement, bei welchem das Wälzlager einen mit einem Betätigungsorgan (8) zusammenwirkenden Ring (6) aufweist, während sein anderer Ring (3) in bezug auf einen axial beweglichen und zwecks Einkuppelns und Auskuppelns betätigbaren Halter (2) zentriert und mit einem gewissen radialen Spiel, sowie vermittels einer Agraffe auf dem Halter mit elastischer Klemmkraft axial gleitbar gehalten ist, dadurch gekennzeichnet, dass die Agraffe (5a, 5c) eine lokalisierte Klemmwirkung des Ringes (3) auf den Halter (2) ausübt, derart, dass sie für den Ring (3) das Zentrum einer Schwenkbewegung bildet, welche im Hinblick auf die Selbstzentrierung dem radialen Gleitspiel überlagert ist.

2. Selbstzentrierendes Wälzlager-Kupplungsanschlagelement nach Anspruch 1, dadurch gekennzeichnet, dass es eine zweite, der vorgenannten Agraffe (5a, 5c) diametral entgegengesetzte Klemmagraffe (5b, 5d) aufweist, die auf den Halter (2) eine Klemmwirkung ausübt, welche geringer ist, als diejenige der vorgenannten ersten Agraffe (5a, 5c).

3. Selbstzentrierendes Wälzlager-Kupplungsanschlagelement nach den Ansprüchen 1 und 2, dadurch gekennzeichnet, dass die beiden Agraffen (5a, 5b; 5c, 5d) derart gestaltet sind, dass sie an der Abstützseite des geklemmten Wälzlagerringes (3) entgegengesetzten Seite des Halters (2) mit einer Kupplungsbetätigungsgabel zusammenwirkende Organe abstützen.

**Claims**

1. Selfcentering rolling bearing coupling stop, wherein the bearing comprises a ring (6) adapted to cooperate with a coupling actuating organ (8), while its other ring (3) is centered on a support (2) adapted to be actuated axially for engaging and disengaging the coupling, with a certain radial play and with elastic clamping by means of a clip arranged in an axially sliding manner on said support, characterized in that said clip (5a, 5c) exerts a localized clamping force of the ring (3) on the support (2), so as to constitute for said ring (3) the center of a pivotal movement which is superimposed to its radial sliding play for the process of selfcentering.

2. Selfcentering rolling bearing coupling stop according to claim 1, characterized in that it comprises a second clamping clip (5b, 5d) diametrically opposed to the aforementioned clip (5a, 5c), but exerting a clamping force of ring 3 on the support (2), which is less strong than that of the first-mentioned clip (5a, 5c).

3. Selfcentering rolling bearing coupling stop according to claims 1 and 2, characterized in that the two clips (5a, 5b; 5c, 5d) are shaped in such a manner that they serve, on the surface of the support (2) which is opposed to the bearing surface of the clamped bearing ring (3), as organs cooperating with a fork for actuating the coupling.

FIG_2

FIG_1

FIG_3

FIG_4

FIG_5

FIG_7

FIG_6

FIG_8

FIG_9

FIG_10